# FASCICULE DE BREVET EUROPEEN

(11) **EP 4 152 732 B1**
(45) Date de publication et mention de la délivrance du brevet: **15.05.2024**
(21) Numéro de dépôt: 22194788.0
(22) Date de dépôt: 09.09.2022
(51) Int. Cl.: H04L 67/52, H04L 67/50, H04L 67/63, H04L 67/12

(54) **PROCÉDÉ D'ÉCHANGE D'INFORMATIONS SUR UN ÉVÈNEMENT ET SYSTÈME D'ÉCHANGE D'INFORMATIONS ASSOCIÉ**
VERFAHREN ZUM AUSTAUSCH VON INFORMATIONEN ÜBER EIN EREIGNIS UND INFORMATIONSAUSTAUSCHSYSTEM DAFÜR
METHOD FOR EXCHANGING EVENT INFORMATION AND INFORMATION EXCHANGE SYSTEM THEREFOR

(30) Priorité: 16.09.2021 FR 2109731
(43) Date de publication de la demande: 22.03.2023
(73) Titulaire: Idemia Identity & Security France, 92400 Courbevoie (FR)
(72) Inventeur: BOUGON, Mikaël, 92400 Courbevoie (FR); BOUATOU, Vincent, 92400 Ciourbevoie (FR); TOURET, Olivier, 92400 Courbevoie (FR); BEAUDEAU, Jérôme, 92400 Courbevoie (FR); RENAUD, Nicolas, 92400 Courbevoie (FR)
(74) Mandataire: Idemia

(56) Documents cités:
- EP-A1- 3 599 134
- KR-A- 20190 127 101
- US-A1- 2019 193 659

## Description

L'invention concerne le domaine d'échange d'informations sécurisé, en particulier d'images vidéo, sur un incident ou un accident.

Il est connu de l'état de la technique des systèmes de surveillance coopératifs dans lesquels un utilisateur peut envoyer au système de surveillance ou recevoir du système de surveillance des vidéos d'une zone surveillée. Le système de surveillance prévient l'utilisateur d'une anomalie détectée sur la zone. L'utilisateur peut se déplacer sur la zone et envoyer des images de la zone surveillée au système de sécurité.

Lorsqu'une personne est témoin d'un évènement tel qu'un incident ou d'un accident dans une zone, il n'est pas prévu de système dédié et sécurisé pour envoyer des images de l'évènement à un serveur dédié en vue de recevoir des conseils sur une conduite à tenir et prévenir des services de secours ou des forces de l'ordre. Généralement, le témoin enregistre une vidéo de l'évènement dans la mémoire de son téléphone et la partage sur les réseaux sociaux. Le témoin prévient également les secours ou la police qu'un évènement est en train de se produire, mais n'est pas toujours capable de donner avec précision la localisation de l'évènement, ni de décrire avec pertinence les faits relatifs à l'évènements. Les images postées sur les réseaux sociaux peuvent provoquer de la panique, de la curiosité ou de la malveillance des spectateurs de la vidéo. Le droit à l'image n'est pas respecté. Des spectateurs curieux peuvent se déplacer sur la zone de l'évènement, pour assister en direct à l'évènement, ce qui peut les mettre en danger et gêner l'intervention des services de secours ou des forces de l'ordre. Le témoin n'a pas de retour sur la dangerosité de l'évènement ni sur le risque qu'il prend à rester dans la zone pour filmer

Le document de l'art antérieur US 2019/193659 A1 divulgue la transmission d'informations d'accident, y compris une vidéo de la périphérie d'un véhicule capturée par une caméra montée sur véhicule, à un centre de collecte d'informations lorsqu'une anomalie est détectée dans le comportement du véhicule.

L'invention vise à résoudre les problèmes susmentionnés de l'état de la technique en proposant un procédé d'échange d'informations sécurisé, à l'initiative de l'utilisateur témoin, et fournissant en retour à l'utilisateur témoin des informations relatives à l'évènement.

L'invention porte sur un procédé d'échange d'informations sur un évènement localisé dans une zone, dans un système comprenant un serveur et un dispositif électronique apte à être utilisé par un utilisateur comportant un dispositif d'acquisition d'images, le procédé d'échange d'informations comprenant les étapes suivantes :
- une étape d'ouverture d'un canal de communication bidirectionnel entre le dispositif électronique et le serveur, déclenchée par un utilisateur du dispositif électronique, l'utilisateur étant localisé dans la zone,
- une étape d'acquisition par le dispositif électronique de données de zone, les données de zone comprenant des images de l'évènement acquises par le dispositif d'acquisition et des données de localisation dudit dispositif électronique,
- une étape de transmission, dans laquelle le dispositif électronique transmet au serveur lesdites données de zone,
- une étape d'analyse des données de zone par le serveur,
- une étape de génération d'informations utilisateur par le serveur en fonction de ladite analyse,
- une étape de redescente d'informations, dans laquelle le serveur transmet au dispositif électronique lesdites informations utilisateur pour une communication desdites informations utilisateur à l'utilisateur.

Selon un aspect de l'invention, l'étape d'analyse comprend une analyse machine par un calculateur du serveur et une analyse humaine par un opérateur métier du serveur.

Selon un aspect de l'invention, les informations utilisateur sont fonction de la localisation dudit dispositif électronique.

Selon un aspect de l'invention, les étapes d'acquisition et de transmission sont subordonnées à une autorisation préalable de l'utilisateur.

Selon un aspect de l'invention, les données de zone comprennent en outre des données utilisateur sélectionnées par l'utilisateur parmi une pluralité de contextes événementiels prédéterminés.

Selon un aspect de l'invention, la pluralité de contextes événementiels prédéterminés est fonction de l'analyse et/ou d'un historique d'évènements sur ladite zone.

Selon un aspect de l'invention, l'étape d'ouverture d'un canal de communication comprend un acte utilisateur parmi une lecture par le dispositif électronique d'un code affiché dans ladite zone à l'initiative de l'utilisateur, une activation par l'utilisateur d'un hyperlien envoyé par un système de communication sur le dispositif électronique ou une ouverture déclenchée par l'utilisateur d'une application installée sur le dispositif électronique.

Selon un aspect de l'invention, le canal de communication est agencé de manière à ce que lesdites données de zone sont transmises au serveur sans stockage desdites images sur ledit dispositif électronique.

Selon un aspect de l'invention, l'étape d'analyse comprend une consolidation des données de zone avec d'autres données de zones associées à un ou plusieurs autres dispositifs électroniques localisés dans ladite zone.

Selon un aspect de l'invention, l'étape d'analyse comprend la qualification de l'évènement, le procédé d'échange d'informations comprenant en outre :
- une étape de production de données d'alerte, par le serveur, en fonction de ladite analyse,
- une étape d'envoi desdites données d'alerte par le serveur à des services ou personnes prédéterminés en fonction de la qualification de l'évènement.

Selon un aspect de l'invention, les données d'alerte sont en outre fonction de la qualification de l'évènement et/ou d'une localisation des services ou personnes prédéterminés.

L'invention porte également sur un procédé de traitement de données sur un évènement localisé dans une zone mis en oeuvre par un serveur apte à échanger des informations avec un dispositif électronique comportant un dispositif d'acquisition d'images, le procédé traitement de données comprenant :
- une étape de réception de données de zone en provenance d'un dispositif électronique localisé dans la zone, les données de zone comprenant des images de l'évènement et des données de localisation dudit dispositif électronique,
- une étape d'analyse des données de zone,
- une étape de génération d'informations utilisateur en fonction de ladite analyse,
- une étape de redescente d'informations, dans laquelle le serveur transmet au dispositif électronique lesdites informations utilisateur, pour une communication desdites informations utilisateur à l'utilisateur.

Selon un aspect de l'invention, l'étape d'analyse comprend la qualification de l'évènement, le procédé de traitement de données comprenant en outre :
- une étape de production de données d'alerte, par le serveur, en fonction de ladite analyse,
- une étape d'envoi desdites données d'alerte par le serveur à des services ou personnes prédéterminés en fonction de la qualification de l'évènement.

L'invention porte également sur un serveur apte à échanger des informations avec un dispositif électronique, le serveur comprenant un calculateur configuré pour exécuter les étapes du procédé de traitement de données.

L'invention porte également sur un produit programme d'ordinateur comprenant les instructions de programme mettant en oeuvre les étapes du procédé de traitement de données, lorsque les instructions de programme sont exécutées par un ordinateur.

L'invention porte également sur un système d'échange d'informations sur un évènement localisé dans une zone, comprenant un serveur et un dispositif électronique comportant un dispositif d'acquisition d'images, le dispositif électronique étant configuré pour acquérir des données de zone comprenant des images de l'évènement acquises par le dispositif d'acquisition, et des données de localisation dudit dispositif électronique, suite à une ouverture d'un canal de communication bidirectionnel entre le dispositif électronique et le serveur, déclenchée par un utilisateur localisé dans la zone, et pour transmettre lesdites données de zone au serveur, le serveur étant configuré pour analyser lesdites données de zone pour générer des informations utilisateur en fonction de ladite analyse, et pour transmettre au dispositif électronique lesdites informations utilisateur, le dispositif électronique étant en outre configuré pour communiquer lesdites informations utilisateur à l'utilisateur.

D'autres avantages et caractéristiques de l'invention apparaîtront à la lecture de la description et des dessins.
La figure 1 représente un système d'échange d'informations comprenant un serveur et un dispositif électronique.
La figure 2 illustre les étapes d'un procédé d'échange d'informations.
La figure 3 illustre un échange de flux de données entre un dispositif électronique et un serveur au sein d'un canal de communication bidirectionnel.

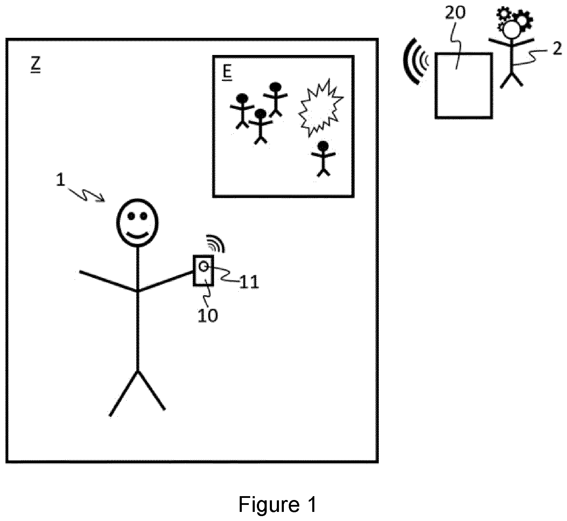

La figure 1 représente un utilisateur 1 localisé dans une zone Z.

L'utilisateur 1 tient dans sa main un téléphone comportant une caméra.

Dans la zone Z, il se passe un évènement E.

Un évènement E peut être un accident ou un incident tel qu'une foule en panique, un attentat, un incendie, une manifestation, une personne qui fait un malaise, un regroupement de personnes, une personne qui crie ou qui appelle au secours, une altercation, une catastrophe naturelle, un éboulement. Ces exemples sont non limitatifs.

La figure 1 représente également un système d'échange d'informations comprenant un serveur 20 et un dispositif électronique 10.

Le serveur 20 n'est généralement pas localisé dans la zone Z, mais cela est possible si l'évènement E se produit proche du lieu où se trouve le serveur 20. Le dispositif électronique 10 est localisé dans la zone Z.

Le dispositif électronique 10 comporte un dispositif d'acquisition d'images 11.

Sur la figure 1, le dispositif électronique 10 est un téléphone et le dispositif d'acquisition d'images 11 est une caméra. Il s'agit d'un dispositif électronique 10 mobile dans la zone Z. L'utilisateur 1 tient le dispositif électronique 10 dans sa main.

Un autre exemple de dispositif électronique 10 mobile est une montre électronique, un ordinateur, une tablette électronique, des lunettes électroniques, un casque électronique. Cette liste est non limitative.

Néanmoins, de manière alternative, le dispositif électronique 10 peut être fixe dans la zone Z. Par exemple le dispositif électronique 10 peut être une borne munie d'une caméra.

Le serveur 20 et le dispositif électronique 10 sont aptes à communiquer l'un avec l'autre de manière bidirectionnelle, en particulier par des moyens de communication sans fil, par exemple par ondes radio.

Un opérateur métier 2 du serveur 20 est représenté sur la figure 1. Un opérateur métier 2 est apte à analyser des données stockées sur le serveur 20. L'opérateur métier 2 est un analyste qui peut avantageusement compléter ou corriger une analyse machine réalisée par un calculateur du serveur 20, par une analyse humaine.

Dans ce cas, le serveur 20 comprend un calculateur apte à faire une analyse machine, à envoyer des données machine issues de l'analyse machine à un opérateur métier 2 et à recevoir des données traitées issues d'une analyse humaine des données machine, réalisée par l'opérateur métier 2.

Le procédé d'échange d'informations selon l'invention comprend plusieurs étapes.

Selon une étape d'ouverture 100, un utilisateur 1 localisé dans la zone Z, déclenche l'ouverture un canal de communication bidirectionnel entre le dispositif électronique 10 et le serveur 20.

L'ouverture d'un canal de communication bidirectionnel est déclenchée par l'utilisateur 1. Suite à l'ouverture du canal de communication, le serveur 20 peut envoyer des données au dispositif électronique 10 et le dispositif électronique peut envoyer des données au serveur 20. Le canal de communication est bidirectionnel ce qui signifie que la communication au sein du canal de communication est bidirectionnelle.

Le déclenchement de l'ouverture du canal de communication peut être réalisé par une lecture d'un code affiché dans ladite zone Z, par le dispositif électronique 10, à l'initiative de l'utilisateur 1. Par exemple, l'utilisateur est localisé dans la zone Z et remarque qu'un évènement E est en train de se produire dans ladite zone Z. Dans la zone Z est affiché un code, par exemple un QR-code. Le code est par exemple affiché sur un panneau, un mur, une borne. L'utilisateur 1 se déplace jusqu'à l'emplacement où est affiché le code et le scanne à l'aide de son dispositif électronique 10, en particulier son téléphone.

Le déclenchement de l'ouverture du canal de communication peut être réalisé par une activation par l'utilisateur 1 d'un hyperlien envoyé par un système de communication sur le dispositif électronique 10. Par exemple, un système de communication envoie à des dispositifs électroniques 10 localisés dans la zone Z ou à proximité de la zone Z, un message, en particulier un SMS (acronyme de Short Message Service en anglais) comprenant un hyperlien. L'utilisateur 1 clique sur l'hyperlien qui va ouvrir sur le dispositif électronique 10 une page internet prédéterminée ou une application prédéfinie.

Le système de communication peut envoyer un message comprenant l'hyperlien seulement à des abonnés à un service du système de communication. Les abonnés partagent avantageusement la position de leur dispositif électronique 10 avec le système de communication. Cela permet au système de communication d'envoyer le message comprenant l'hyperlien aux abonnés dont le dispositif électronique 10 est localisé dans la zone Z.

Alternativement, le système de communication peut récupérer via un opérateur téléphonique une liste d'adresses de dispositifs électroniques 10 localisés dans la zone Z et leur envoyer un message comprenant l'hyperlien.

L'utilisateur 1, à réception du message comprenant l'hyperlien, peut décider ou non d'ouvrir ledit hyperlien. Si l'utilisateur 1 n'ouvre pas l'hyperlien, l'étape d'ouverture 100 n'est pas mise en oeuvre.

Avantageusement, la durée de fonctionnement de l'hyperlien est inférieure à la durée de l'évènement E. Ainsi, lorsque l'évènement E est jugé terminé par le serveur 20, l'hyperlien ne fonctionne plus, ce qui permet de limiter l'afflux de données non pertinentes au serveur 20, lié à une mise en oeuvre non pertinente ou abusive du procédé d'échange d'informations, par une utilisation non pertinente ou abusive par des utilisateurs de dispositifs électroniques 10

Le déclenchement de l'ouverture du canal de communication peut être réalisé par une ouverture par l'utilisateur 1 d'une application installée sur le dispositif électronique 10. L'utilisateur 1 a installé au préalable une application spécifique sur son dispositif électronique 10. Sur détection d'un évènement E dans la zone Z, l'utilisateur 1 ouvre l'application spécifique.

Dans le cas d'un dispositif électronique fixe, le déclenchement de l'ouverture du canal de communication peut être réalisé par l'appui d'un bouton sur le dispositif électronique ou via la sélection d'un menu sur un écran du dispositif électronique. Sur détection d'un évènement E dans la zone Z, l'utilisateur 1 se déplace jusqu'au dispositif électronique et appuie sur le bouton ou sélectionne le menu.

Selon une étape d'acquisition 101, le dispositif électronique 10 acquiert des données de zone.

Les données de zone comprennent :
- des images de l'évènement E acquises par le dispositif d'acquisition 11,
- et des données de localisation dudit dispositif électronique 10.

Dans le cas d'un dispositif électronique 10 mobile, l'utilisateur 1 se déplace si besoin et si possible vers le lieu de l'évènement E et oriente l'objectif du dispositif d'acquisition 11 du dispositif électronique 10 en direction de l'évènement E. L'utilisateur 1 déclenche l'acquisition d'images par le dispositif d'acquisition 11 de l'évènement E, de préférence l'acquisition d'images vidéo.

Dans le cas d'un dispositif électronique 10 fixe, l'utilisateur 1 se déplace jusqu'au dispositif électronique 10 et oriente l'objectif du dispositif d'acquisition 11 du dispositif électronique 10 en direction de l'évènement E si cela est possible. Dans le cas où le dispositif d'acquisition 11 n'acquiert pas en continu des images, l'utilisateur 1 déclenche l'acquisition d'images.

Dans le cas d'un dispositif électronique 10 mobile, le dispositif électronique 10 comporte un dispositif de localisation. Le dispositif électronique 10 est donc apte à acquérir des données de localisation via le dispositif de localisation embarqué.

Dans le cas d'un dispositif électronique 10 fixe, le dispositif électronique 10 connaît sa position géographique, qui est fixe et comprend donc dans une mémoire des données de localisation. Le dispositif électronique 10 peut également comporter un dispositif de localisation, même si sa localisation est fixe.

De manière optionnelle mais avantageuse, les données de zone peuvent comprendre des données utilisateur sélectionnées par l'utilisateur 1 parmi une pluralité de contextes événementiels prédéterminés. Par exemple, l'utilisateur 1 a la possibilité de choisir des contextes événementiels prédéterminés dans un menu déroulant. On peut citer pour exemples non limitatifs : attentat, violence, attaque à main armée, malaise, panique, manifestation, regroupement de personnes, appel au secours, suicide, bagarre, éboulement, inondation, incendie, fuite de gaz...

Les données utilisateur peuvent comprendre un ou plusieurs contextes évènementiels. En effet, l'utilisateur 1 peut sélectionner plusieurs contextes évènementiels.

Selon une étape de transmission 102, le dispositif électronique 10 transmet au serveur 20 lesdites données de zone. L'étape de transmission 102 comprend une étape de réception 102a par le serveur 20 de données de zone en provenance du dispositif électronique 10 localisé dans la zone Z.

Le serveur 20 reçoit donc des images de l'évènement E et des données de localisation du dispositif électronique 10 localisé dans la même zone Z que l'évènement E. Le serveur 20 reçoit ainsi des images de l'évènement E et des données approximatives de localisation de l'évènement E. Optionnellement, le serveur 20 reçoit aussi des données utilisateur qui précisent le contexte de l'évènement E, selon l'utilisateur 1.

Le dispositif électronique 10 peut demander à l'utilisateur 1 une autorisation pour l'envoi des données de zone au serveur 20, en particulier une autorisation pour l'envoi des données de localisation.

Avantageusement, le canal de communication entre le dispositif électronique 10 et le serveur 20 est agencé de manière à ce que lesdites données de zone sont transmises au serveur 20 sans stockage des images sur ledit dispositif électronique 10.

Optionnellement, le canal de communication peut être agencé de manière à prévoir la possibilité que des images soient stockées sur le dispositif électronique 10 dans un cas d'une rupture du canal de communication entre le dispositif électronique 10 et le serveur 20 ou en cas de mauvaise qualité de transmission des données de zone. Avantageusement, le stockage n'est dans ce cas possible que dans la limite de la durée de la rupture du canal de communication ou du problème de qualité de transmission, et de préférence limitée à une durée prédéterminée. Avantageusement encore, les images stockées sont cryptées afin de ne pas pouvoir être utilisées par l'utilisateur 1.

L'avantage de cet agencement particulier du canal de communication permet d'éviter une utilisation personnelle des images par l'utilisateur 1 ou une diffusion sur des réseaux sociaux desdites images. Cela permet d'éviter des utilisations non éthique, malveillantes ou commerciales des images et les problèmes juridiques de droit à l'image.

De manière préférentielle, les données qui transitent par le canal de communication sont cryptées, en particulier les images.

Selon une étape d'analyse 103, le serveur 20 analyse les données de zone.

Avantageusement, l'étape d'analyse 103 comprend une analyse machine par un calculateur du serveur 20 et une analyse humaine par un ou plusieurs opérateurs métier 2 du serveur 20.

L'analyse comprend le diagnostic des images pour vérifier que l'évènement E est un évènement pertinent. Si l'utilisateur met en oeuvre le procédé de l'invention de manière abusive et non pertinente, le diagnostic le détecte et met fin à l'exécution du procédé en fermant le canal de communication entre le dispositif de communication 10 et le serveur 20, par exemple.

L'analyse comprend l'horodatage, le stockage et éventuellement le traçage des images pour une utilisation ultérieure par des services agréés, notamment à des fins de preuves.

L'analyse comprend la qualification de l'évènement E.

Une qualification est par exemple un incendie, une fuite de gaz, une altercation, un accident avec victimes, un accident sans victime.

La qualification rejoint dans son contenu les contextes événementiels, mais la finalité n'est pas la même.

La qualification de l'évènement E est réalisée en vue d'alerter ou informer des services ou des personnes prédéterminées, par exemple en vue d'une intervention sur la zone Z, de génération de données statistiques, de fourniture de preuves.

La qualification de l'évènement E peut servir à donner une alerte ou une information à des services ou des personnes prédéterminées, en fonction de ladite qualification. Par exemple, dans le cas d'un incendie, les services prédéterminés sont les services de pompiers. Dans le cas d'un accident avec victimes, plusieurs services prédéterminés sont pertinents : la police et les secours médicaux.

Les contextes événementiels ont pour finalité de proposer une liste des contextes d'évènements à un utilisateur en vue d'une sélection dudit utilisateur en des données utilisateur, pour améliorer l'analyse.

En effet, les données utilisateur peuvent permettent d'accélérer l'analyse. Une analyse des images est plus efficace et ciblée lorsque le contexte de l'évènement E est identifié.

Par exemple, si le serveur 20 dispose de données utilisateur précisant un contexte d'attaque à main armée, l'analyse des images peut s'orienter immédiatement sur un comptage de personnes, d'armes, de reconnaissance faciale de porteurs d'armes et une évaluation d'un besoin d'assistance médicale.

Par exemple, si le serveur 20 dispose de données utilisateur précisant un contexte d'incendie, l'analyse des images peut s'orienter directement sur une localisation dans les images des flammes pour déterminer par exemple l'étage auquel sévit l'incendie dans un immeuble, les caractéristiques des flammes pour déterminer l'ampleur de l'incendie et l'évaluation d'un danger pour des personnes dans la zone Z.

L'analyse comprend la détection dans les images de personnes ou d'objets, en particulier d'un nombre de personnes impliquées dans l'évènement E, de victimes potentielles, d'armes, de véhicules.

L'analyse comprend la caractérisation dans les images de personnes, en particulier par des moyens biométriques, la caractérisation d'objets ou de bruits, en vue d'une comparaison à une base de données de modèles pour la reconnaissance, l'identification, l'authentification desdites personnes, objets ou bruits. La caractérisation d'un bruit permet de suspecter par exemple une explosion, une rixe, un incendie, une panique de foule.

Le serveur 20 peut comprendre un module d'intelligence artificielle pour des résultats d'analyse plus rapides et plus fiables.

Avantageusement, un ou plusieurs opérateurs métier 2 du serveur 20 peuvent intervenir si nécessaire dans un rôle de validation, en particulier en bout de chaîne d' opérations automatiques d'analyse du serveur 20. Cela permet à la fois de bénéficier de la rapidité et de la puissance de calcul apportées par des opérations automatiques d'analyse et d'une qualité de l'analyse humaine apportée par l'intervention de professionnels, en particulier en aval des opérations automatiques d'analyse, là où cela est le plus pertinent.

Le serveur 20 est apte à recevoir d'autres données de zone envoyées par un ou plusieurs autres dispositifs électroniques 10 localisés dans ladite même zone Z. Les autres données de zone sont associées à une ou de plusieurs autres ouvertures d'un canal de communication bidirectionnel entre le serveur 20 et lesdits autres dispositifs électroniques 10, déclenchées par un plusieurs autres utilisateurs localisés dans la zone Z.

Dans ce cas, l'étape d'analyse 103 comprend avantageusement une consolidation de toutes les données de zone associées à la zone Z par le serveur 20. Le serveur 20 effectue alors l'analyse sur des données de zone consolidées.

La consolidation des données de zone permet d'augmenter un degré de confiance par exemple dans les données utilisateur que le serveur 20 peut comparer, le contexte de l'évènement pouvant être alors confirmé et précisé.

La consolidation d'images permet d'enrichir l'analyse, le serveur disposant d'images du même évènement E avec des points de vue différents.

La localisation de l'évènement peut être également mieux évaluée et précisée si le serveur 20 dispose de la localisation d'une pluralité de dispositifs électroniques 10 dans la zone Z.

L'étape de transmission 102, et l'étape d'analyse 103 sont exécutées en parallèle. Ainsi, au fur et à mesure de la transmission des données de zone au serveur 20, le serveur 20 analyse lesdites données de zone.

Avantageusement, en vue de la sélection des données utilisateur par l'utilisateur 1, la pluralité de contextes événementiels prédéterminés est fonction de la localisation du dispositif électronique.

En effet, en fonction de la localisation du dispositif électronique 10, certains contextes événementiels ne sont pas pertinents. Ainsi, pour un dispositif électronique 10 localisé à Paris, il n'est pas pertinent de proposer à l'utilisateur 1 un contexte évènementiel maritime tel qu'un tsunami.

Avantageusement, la pluralité de contextes événementiels prédéterminés est fonction de l'analyse.

En effet, en fonction de l'analyse des premières images, le serveur 20 peut exclure certains contextes événementiels. Par exemple si une première analyse détecte des flammes dans les images, il n'est pas pertinent de proposer à l'utilisateur des contextes événementiels tels qu'une inondation.

Comme décrit précédemment, l'analyse est réalisée sur les données de zone ou les données de zone consolidées.

Avantageusement, la pluralité de contextes événementiels prédéterminés est fonction d'un historique d'évènements sur ladite zone Z.

Par exemple, si le serveur 20 dispose d'un historique d'évènements E sur ladite zone Z, le serveur 20 peut estimer la probabilité d'occurrence d'un contexte lié à l'évènement E. Par exemple, s'il est fréquent dans la zone Z que se produisent des altercations entre personnes, il est pertinent de proposer à l'utilisateur 1 des contextes évènementiels de rapportant à un contexte d'altercation.

Avantageusement, la pluralité de contextes évènementiels prédéterminés est fonction de données contextuelles telles qu'un moment de la journée ou de l'année, une heure, un jour, un mois, une saison, la météo, un relevé de pollution, un trafic routier ou ferré, un programme de manifestations, un contexte politique... Cette liste est non limitative.

Par exemple, certains évènements sont plus probables la nuit et il est pertinent de proposer à l'utilisateur 1 des contextes événementiels nocturnes lorsque l'évènement E se produit pendant la nuit.

Ainsi, les contextes événementiels proposées à l'utilisateur 1 peuvent être filtrés, certains contextes événementiels n'étant pas proposés à l'utilisateur car improbables au regard de l'analyse, de la localisation du dispositif électronique 10, de données contextuelles et/ou d'un historique d'évènements sur ladite zone Z.

Les contextes événementiels proposés à l'utilisateur 1 peuvent également ou alternativement être classés des plus probables au moins probables en fonction de l'analyse, de la localisation du dispositif électronique 10, de données contextuelles et/ou d'un historique d'évènements sur ladite zone Z. Ainsi, lorsque l'utilisateur 1 sélectionne les contextes événementiels, lui sont proposés en priorité, par exemple en tête d'un menu déroulant, les contextes évènementiels les plus probables. Les erreurs de sélection sont ainsi minimisées et la sélection de l'utilisateur est accélérée.

Les données utilisateur sont ainsi plus pertinentes et disponibles très rapidement pour le dispositif électronique 10.

Ainsi, de manière avantageuse, des contextes évènementiels sont proposées à l'utilisateur 1 en vue de générer des données utilisateur, après une première analyse par le serveur 20 de premières données de zone associées au dispositif électronique 10 dudit utilisateur 1 ou d'autres données de zones associées à un ou plusieurs autres dispositifs électroniques 10.

Il est également possible de proposer à l'utilisateur 1 de sélectionner des contextes évènementiels parmi une pluralité de contextes évènementiels non filtrés et non classés, en particulier avant qu'une première analyse n'ait été faite par le serveur 20 des images. Comme décrit précédemment, cela présente également un avantage. Les données utilisateur peuvent permettent d'accélérer l'analyse par le serveur 20. En effet, une analyse des images est plus efficace et ciblée lorsque le contexte de l'évènement E est identifié.

Des données utilisateur peuvent être envoyées plusieurs fois pendant l'étape de transmission par exemple si le serveur 20 a besoin pour son analyse de préciser, confirmer ou vérifier le contexte de l'évènement E.

Il est donc possible que le dispositif électronique 10 envoie des données utilisateur avant la première analyse du serveur 20 et après une première analyse du serveur 20.

Lorsque les contextes événementiels sont non filtrés et non classés, ils peuvent être proposés à l'utilisateur 1 pour une sélection en vue de générer des données utilisateur, par défaut, sans filtrage ou classement préalable par le serveur 20.

Lorsque les contextes événementiels sont filtrés ou classés, le serveur 20 envoie au préalable au dispositif électronique 10, suite à une première analyse de données de zone consolidées ou non, une liste de contextes événementiels filtrés ou classés, ou des données de filtre et/ ou de classement, pour que ledit dispositif électronique 10 propose à l'utilisateur 1 des contextes événementiels filtrés et/ou classés en vue de la sélection des données utilisateur.

Selon une étape de génération 104, le serveur 20 génère des informations utilisateur en fonction de ladite analyse, ladite analyse étant issue d'une analyse machine réalisée par un calculateur du serveur 20 et optionnellement avantageusement complétée, compilée, validée et/ou corrigée par une analyse humaine réalisée par un opérateur métier 2 du serveur 20.

Le but est de générer des informations utiles à l'utilisateur 1 qui se trouve sur la zone Z, proche du lieu de l'évènement E.

Les informations utilisateur peuvent être des recommandations de conduite à tenir, des chemins d'évacuation à privilégier, des informations générales sur l'évènement E telles qu'un niveau de danger ou de menace, une durée, une information à diffuser sur la zone Z. Ces exemples sont non limitatifs.

Avantageusement, les informations utilisateur sont fonction de la localisation du dispositif électronique. En effet, pour informer un utilisateur 1 sur un chemin d'évacuation il est avantageux de prendre en compte sa position qui est sensiblement la même que celle du dispositif électronique 10.

Selon une étape de redescente d'informations 105, le serveur 20 transmet au dispositif électronique 10 lesdites informations utilisateur pour une communication desdites informations utilisateur à l'utilisateur 1.

La communication de l'information peut être réalisée par l'envoi d'un message par SMS sur le dispositif électronique 10, sur une page internet, sur une application téléchargée sur le dispositif électronique.

De son côté, le serveur 20 met en oeuvre l'invention via un procédé de traitement de données sur un événement localisé dans une zone mis en oeuvre par un serveur apte à échanger des informations avec un dispositif électronique comportant un dispositif d'acquisition d'images, le procédé traitement de données comprenant :
- une étape de réception 102a de données de zone en provenance d'un dispositif électronique localisé dans la zone, les données de zone comprenant des images de l'évènement et des données de localisation dudit dispositif électronique,
- l'étape d'analyse 103 des données de zone,
- l'étape de génération 104 d'informations utilisateur en fonction de ladite analyse,
- l'étape de redescente d'informations 105, dans laquelle le serveur 20 transmet au dispositif électronique lesdites informations utilisateur, pour une communication desdites informations utilisateur à l'utilisateur.

Le procédé de traitement de données est un sous ensemble du procédé d'échange d'informations, les étapes communes aux deux procédés étant les étapes mises en oeuvre par le serveur 20.

Les étapes d'analyse 103, de génération 104 et de redescente d'information 105 ont été décrites dans le cadre du procédé d'échange d'information. Tous les modes de réalisation, les précisions, les options, les exemples qui ont été décrits pour le procédé d'échange d'informations sont valables pour le procédé de traitement de données, dans le cadre de leur mise en oeuvre par le serveur 20.

S'il est opportun d'alerter des services ou des personnes prédéterminées sur l'évènement E, le procédé d'échange d'informations comprend en outre deux étapes supplémentaires. Ces étapes sont également applicables au procédé de traitement de données puisqu'elles sont mises en oeuvre par le serveur 20.

Selon une étape de production 114, le serveur 20 produit des données d'alerte, en fonction de ladite analyse et en particulier, en fonction de la qualification de l'évènement E.

Les données d'alerte comprennent par exemple des images sélectionnées parmi les images issues des données de zone ou des données de zones compilées.

En fonction de la qualification de l'évènement, les images sélectionnées ne sont pas les mêmes. Par exemple, dans le cadre d'une qualification d'attentat, il est opportun de produire des images globales de l'évènement, des images de visages des terroristes, des armes et des potentielles victimes. Dans le cadre d'un incendie, il est opportun de produire des images des flammes et des personnes prisonnières des flammes.

Les données d'alerte comprennent par exemple l'adresse de l'évènement E, l'heure de début de l'évènement E, la qualification de l'évènement E, le nombre de victimes, le nombre de personnes impliquées dans l'évènement, un degré d'urgence, de violence, de danger.

Avantageusement, des données d'alerte sont fonction de la localisation des services ou des personnes prédéterminées. En effet, il peut être opportun d'envoyer à une personne prédéterminée, par exemple un policier en intervention dans la zone Z, des images selon un certain point de vue, en fonction de la localisation de ladite personne prédéterminée, ici, le policier. Ces images complèteront et enrichiront la vision que le policier a de l'évènement E avec ses propres yeux.

Selon une étape d'envoi 115, le serveur 20 envoie lesdites données d'alerte à des services ou personnes prédéterminés en fonction de la qualification de l'évènement.

Par exemple dans le cas d'un évènement qualifié d'incendie, les données d'alerte sont envoyées à la caserne des pompiers ou à un pompier en intervention dans la zone Z.

Par exemple dans le cas d'un évènement qualifié d'attentat, les données d'alerte sont envoyées au poste de police le plus proche de la zone Z ou à un policier en intervention dans la zone Z.

Les données d'alertes sont par exemple envoyées sur un serveur, un ordinateur, ou sur des dispositifs de visualisation mobiles identifiés comme appartenant aux personnes prédéterminées. Une liste non limitative de dispositifs de visualisation mobiles comprend un ordinateur portable, un système multimédia embarqué sur un véhicule de secours ou de police, une tablette, un téléphone, une montre connectée, des lunettes à réalité augmentée.

Avantageusement, des données d'alerte sont envoyées régulièrement aux services et personnes prédéterminées, au fur et à mesure de la réception de données de zone par le serveur 20.

Une personne prédéterminée peut être en outre un utilisateur 1 d'un dispositif électronique 10 et participer à enrichir l'analyse du serveur 20 en fournissant des données de zone. Par exemple, un policier porteur de lunettes à réalité augmentée en intervention dans la zone Z peut avec ses lunettes à la fois recevoir des données d'alerte du serveur 20 et envoyer des données de zone audit serveur 20.

Avantageusement, des données d'alerte sont envoyées de manière cryptées.

Les étapes de production 114 et d'envoi 115 peuvent être réalisées simultanément aux étapes de génération 104 et de redescente d'informations 105.

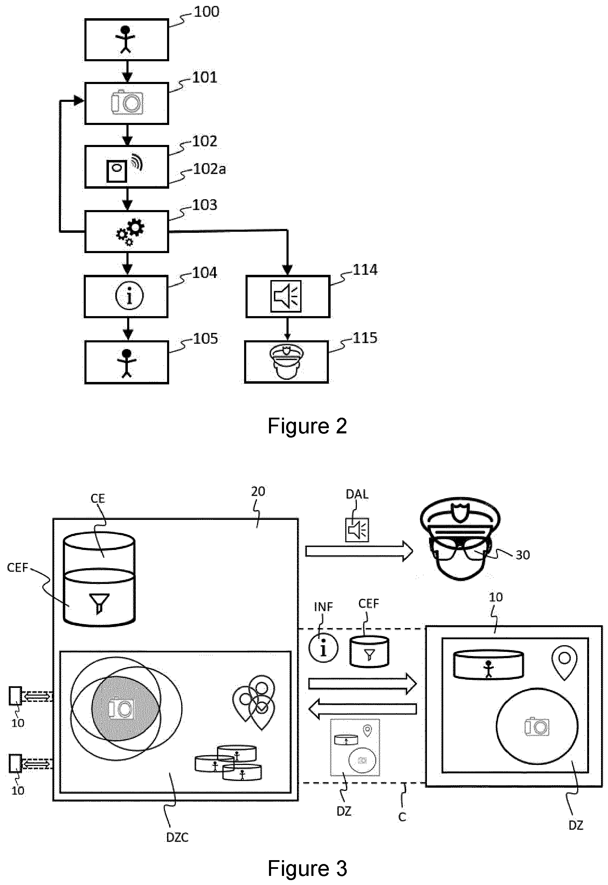

La figure 3 illustre un exemple de système comprenant un dispositif électronique 10 d'un premier utilisateur 1 et un serveur 20, mais également aussi deux autres dispositifs électroniques 10 de deux autres utilisateurs.

Tous les dispositifs électroniques 10 sont localisés dans la même zone Z et sont aptes à exécuter les étapes du procédé de l'invention.

Sur la figure 3, seul le dispositif électronique 10 du premier utilisateur 1 est détaillé, mais ce qui s'applique au dispositif électronique 10 du premier utilisateur 1, s'applique aux deux autres dispositifs électroniques 10.

Le dispositif électronique 10 du premier utilisateur 1 comprend des données de zone DZ.

Le serveur 20 comprend des données de zone consolidées DZC issues des données de zone DZ associées aux trois dispositifs électroniques 10 localisés dans la même zone Z.

Le serveur 20 comprend des données de contexte événementiels CE qui ont été filtrées et /ou classées en des données de contexte événementiels filtrées et/ou classées CEF suite à une première analyse du serveur 20 des données de zone consolidées DZC.

Un canal de communication bidirectionnel C a été ouvert à l'initiative du premier utilisateur 1 et permet des échanges de données dans les deux sens, entre le dispositif électronique 10 et le serveur 20.

Plusieurs flux de données au sein du canal de communication C sont représentés :
- des données de zone DZ transitant du dispositif électronique 10 du premier utilisateur 1 vers le serveur 20,
- des données de contexte événementiels filtrées et/ou classées CEF transitant du serveur 20 vers le dispositif électronique 10 du premier utilisateur 1,
- des informations utilisateur INF transitant du serveur 20 vers le dispositif électronique 10 du premier utilisateur 1.

Il est également représenté sur la figure 3 un envoi de données d'alerte DAL du serveur 20 vers des lunettes connectées 30 d'un policier.

## Revendications

1. Procédé d'échange d'informations sur un événement (E) localisé dans une zone (Z), dans un système comprenant un serveur (20) et un dispositif électronique (10) apte à être utilisé par un utilisateur (1), le dispositif électronique (10) comportant un dispositif d'acquisition d'images (11), le procédé d'échange d'informations comprenant les étapes suivantes :
- une étape d'ouverture (100) d'un canal de communication bidirectionnel entre le dispositif électronique (10) et le serveur (20), déclenchée par un utilisateur (1) du dispositif électronique (10), l'utilisateur (1) étant localisé dans la zone (Z),
- une étape d'acquisition (101) par le dispositif électronique (10) de données de zone, les données de zone comprenant des images de l'évènement (E) acquises par le dispositif d'acquisition (11) et des données de localisation dudit dispositif électronique (10),
- une étape de transmission (102), dans laquelle le dispositif électronique (10) transmet au serveur (20) lesdites données de zone,
- une étape d'analyse (103) des données de zone par le serveur (20),
- une étape de génération (104) d'informations utilisateur par le serveur (20) en fonction de ladite analyse, les informations utilisateur comprenant des informations utiles à l'utilisateur (1 fonction de la localisation du dispositif électronique (10), proche du lieu de l'événement (E).
- une étape de redescente d'informations (105), dans laquelle le serveur (20) transmet au dispositif électronique (10) lesdites informations utilisateur, pour une communication desdites informations utilisateur à l'utilisateur (1).

2. Procédé d'échange d'informations selon la revendication précédente, l'étape d'analyse (103) comprenant une analyse machine par un calculateur du serveur (20) et une analyse humaine par un opérateur métier (2) du serveur (20).

3. Procédé d'échange d'informations selon l'une quelconque des revendications précédentes, les informations utilisateur étant fonction de la localisation dudit dispositif électronique (10).

4. Procédé d'échange d'informations selon l'une quelconque des revendications précédentes, les données de zone comprenant en outre des données utilisateur sélectionnées par l'utilisateur (1) parmi une pluralité de contextes évènementiels prédéterminés.

5. Procédé d'échange d'informations selon la revendication précédente, la pluralité de contextes évènementiels prédéterminés étant fonction de l'analyse et/ou d'un historique d'évènements sur ladite zone (Z).

6. Procédé d'échange d'informations selon l'une quelconque des revendications précédentes, l'étape d'ouverture (100) d'un canal de communication comprenant un acte utilisateur parmi une lecture par le dispositif électronique (10) d'un code affiché dans ladite zone (Z) à l'initiative de l'utilisateur (1), une activation par l'utilisateur (1) d'un hyperlien envoyé par un système de communication sur le dispositif électronique (10), ou une ouverture par l'utilisateur (1) d'une application installée sur le dispositif électronique (10).

7. Procédé d'échange d'informations selon l'une quelconque des revendications précédentes, le canal de communication étant agencé de manière à ce que lesdites données de zone sont transmises au serveur (20) sans stockage desdites images sur ledit dispositif électronique (10).

8. Procédé d'échange d'informations selon l'une quelconque des revendications précédentes, l'étape d'analyse (103) comprenant une consolidation des données de zone avec d'autres données de zones associées à un ou plusieurs autres dispositifs électroniques (10) localisés dans ladite zone (Z).

9. Procédé d'échange d'informations selon l'une quelconque des revendications précédentes, l'étape d'analyse (103) comprenant la qualification de l'évènement, le procédé d'échange d'informations comprenant en outre :
- une étape de production (114) de données d'alerte, par le serveur (20) en fonction de ladite analyse,
- une étape d'envoi (115) desdites données d'alerte par le serveur (20) à des services ou personnes prédéterminés, en fonction de la qualification de l'évènement.

10. Procédé d'échange d'informations selon la revendication précédente, les données d'alerte étant en outre fonction de la qualification de l'évènement et/ou d'une localisation des services ou personnes prédéterminés.

11. Procédé de traitement de données sur un événement (E) localisé dans une zone (Z) mis en oeuvre par un serveur (20) apte à échanger des informations avec un dispositif électronique (10) comportant un dispositif d'acquisition d'images (11), le procédé traitement de données comprenant :
- une étape de réception (102a) de données de zone en provenance d'un dispositif électronique (10) localisé dans la zone (Z), les données de zone comprenant des images de l'évènement (E) et des données de localisation dudit dispositif électronique (10), suite à une ouverture d'un canal de communication bidirectionnel entre le dispositif électronique (10) et le serveur (20) déclenchée par un utilisateur (1) du dispositif électronique (10) localisé dans la zone (Z),
- une étape d'analyse (103) des données de zone,
- une étape de génération (104) d'informations utilisateur en fonction de ladite analyse, les informations utilisateur comprenant des informations utiles à l'utilisateur (1) fonction de la localisation du dispositif électronique (10), proche du lieu de l'événement (E)
- une étape de redescente d'informations (105), dans laquelle le serveur (20) transmet au dispositif électronique (10) lesdites informations utilisateur, pour une communication desdites informations utilisateur à l'utilisateur (1).

12. Serveur (20) apte à échanger des informations avec un dispositif électronique (10), comprenant un calculateur configuré pour exécuter les étapes du procédé de traitement de données selon la revendication précédente.

13. Produit programme d'ordinateur comprenant les instructions de programme mettant en oeuvre les étapes du procédé de traitement de données selon la revendication 11, lorsque les instructions de programme sont exécutées par un ordinateur.

14. Système d'échange d'informations sur un événement (E) localisé dans une zone (Z), comprenant un serveur (20) et un dispositif électronique (10) comportant un dispositif d'acquisition d'images (11),
le dispositif électronique (10) étant configuré pour acquérir des données de zone comprenant des images de l'évènement (E) acquises par le dispositif d'acquisition (11), et des données de localisation dudit dispositif électronique (10), suite à une ouverture d'un canal de communication bidirectionnel entre le dispositif électronique (10) et le serveur (20), déclenchée par un utilisateur (1) du dispositif électronique (10) localisé dans la zone (Z),
et pour transmettre les dites données de zone au serveur (20),
le serveur étant configuré pour analyser lesdites données de zone pour générer des informations utilisateur en fonction de ladite analyse, les informations utilisateur comprenant des informations utiles à l'utilisateur (1) qui se trouve sur la zone (Z), fonction de la localisation du dispositif électronique (10), proche du lieu de l'événement (E)
et pour transmettre au dispositif électronique (10) lesdites informations utilisateur, le dispositif électronique (10) étant en outre configuré pour communiquer lesdites informations utilisateur à l'utilisateur (1).

## Patentansprüche

1. Verfahren zum Austausch von Informationen über ein in einem Gebiet (Z) befindliches Ereignis (E) in einem System, das einen Server (20) und eine elektronische Vorrichtung (10) umfasst, die zur Benutzung durch einen Benutzer (1) geeignet ist, wobei die elektronische Vorrichtung (10) eine Bilderfassungsvorrichtung (11) umfasst, wobei das Verfahren zum Austausch von Informationen die folgenden Schritte umfasst:
- einen Schritt des Öffnens (100) eines bidirektionalen Kommunikationskanals zwischen der elektronischen Vorrichtung (10) und dem Server (20), der durch einen Benutzer (1) der elektronischen Vorrichtung (10) ausgelöst wird, wobei sich der Benutzer (1) in dem Gebiet (Z) befindet,
- einen Schritt des Erfassens (101) von Gebietsdaten durch die elektronische Vorrichtung (10), wobei die Gebietsdaten von der Erfassungsvorrichtung (11) erfasste Bilder vom Ereignis (E) und Standortdaten der elektronischen Vorrichtung (10) umfassen,
- einen Schritt des Übertragens (102), in dem die elektronische Vorrichtung (10) die Gebietsdaten an den Server (20) überträgt,
- einen Schritt des Analysierens (103) der Gebietsdaten durch den Server (20),
- einen Schritt des Erzeugens (104) von Benutzerinformationen durch den Server (20) abhängig der Analyse, wobei die Benutzerinformationen Informationen umfassen, die abhängig vom Standort der elektronischen Vorrichtung (10) nahe am Ort des Ereignisses (E) für den Benutzer (1) nützlich sind,
- einen Schritt des Rücksendens von Informationen (105), in dem der Server (20) die Benutzerinformationen an die elektronische Vorrichtung (10) als Kommunikation der Benutzerinformationen an den Benutzer (1) sendet.

2. Verfahren zum Austausch von Informationen nach dem vorherigen Anspruch, wobei der Schritt des Analysierens (103) eine maschinelle Analyse durch einen Rechner des Servers (20) und eine menschliche Analyse durch einen Fachbediener (2) des Servers (20) umfasst.

3. Verfahren zum Austausch von Informationen nach einem der vorherigen Ansprüche, wobei die Benutzerinformationen abhängig vom Standort der elektronischen Vorrichtung (10) sind.

4. Verfahren zum Austausch von Informationen nach einem der vorherigen Ansprüche, wobei die Gebietsdaten außerdem Benutzerdaten umfassen, die vom Benutzer (1) aus einer Vielzahl vorbestimmter Ereigniskontexte ausgewählt werden.

5. Verfahren zum Austausch von Informationen nach dem vorherigen Anspruch, wobei die Vielzahl vorbestimmter Ereigniskontexte von der Analyse und/oder einem Ereignisverlauf in dem Gebiet (Z) abhängig sind.

6. Verfahren zum Austausch von Informationen nach einem der vorherigen Ansprüche, wobei der Schritt des Öffnens (100) eines Kommunikationskanals eine Benutzerhandlung aus Lesen eines im dem Gebiet (Z) angezeigten Codes durch die elektronische Vorrichtung (10) auf Initiative des Benutzers (1), Aktivieren eines Hyperlinks, der durch ein Kommunikationssystem gesendet wurde, auf der elektronischen Vorrichtung (10) durch den Benutzer (1) oder Öffnen einer auf der elektronischen Vorrichtung (10) installierten Anwendung durch den Benutzer (1) umfasst.

7. Verfahren zum Austausch von Informationen nach einem der vorherigen Ansprüche, wobei der Kommunikationskanal so eingerichtet ist, dass die Gebietsdaten ohne Speicherung der Bilder auf der elektronischen Vorrichtung (10) auf den Server (20) übertragen werden.

8. Verfahren zum Austausch von Informationen nach einem der vorherigen Ansprüche, wobei der Schritt des Analysierens (103) eine Konsolidierung der Gebietsdaten mit anderen Gebietsdaten in Zusammenhang mit einer oder mehreren anderen in dem Gebiet (Z) befindlichen elektronischen Vorrichtungen (10) umfassen.

9. Verfahren zum Austausch von Informationen nach einem der vorherigen Ansprüche, wobei der Schritt des Analysierens (103) die Einstufung des Ereignisses umfasst, wobei das Verfahren zum Austausch von Informationen außerdem umfasst:
- einen Schritt des Erstellens (114) von Alarmdaten durch den Server (20) abhängig von der Analyse,
- einen Schritt des Sendens (115) der Alarmdaten durch den Server (20) an vorbestimmte Dienste oder Personen abhängig von der Einstufung des Ereignisses.

10. Verfahren zum Austausch von Informationen nach dem vorherigen Anspruch, wobei die Alarmdaten außerdem abhängig von der Einstufung des Ereignisses und/oder eines Standorts der vorbestimmten Dienste oder Personen sind.

11. Verfahren zum Austausch von Informationen über ein in einem Gebiet (Z) befindliches Ereignis (E), das von einem Server (20) umgesetzt wird, der geeignet ist, Informationen mit einer elektronischen Vorrichtung (10) auszutauschen, die eine Bilderfassungsvorrichtung (11) umfasst, wobei das Datenverarbeitungsverfahren umfasst:
- einen Schritt des Empfangens (102a) von Gebietsdaten aus einer im Gebiet (Z) befindlichen elektronischen Vorrichtung (10), wobei die Gebietsdaten Bilder des Ereignisses (E) und Standortdaten der elektronischen Vorrichtung (10) umfassen, nach Öffnen eines bidirektionalen Kommunikationskanals zwischen der elektronischen Vorrichtung (10) und dem Server (20), das durch einen Benutzer (1) der im Gebiet (Z) befindlichen elektronischen Vorrichtung (10) ausgelöst wurde,
- einen Schritt des Analysierens (103) der Gebietsdaten,
- einen Schritt des Erzeugens (104) von Benutzerinformationen durch den Server (20) abhängig von der Analyse, wobei die Benutzerinformationen Informationen umfassen, die abhängig vom Standort der elektronischen Vorrichtung (10) nahe am Ort des Ereignisses (E) für den Benutzer (1) nützlich sind,
- einen Schritt des Rücksendens von Informationen (105), in dem der Server (20) die Benutzerinformationen an die elektronische Vorrichtung (10) als Kommunikation der Benutzerinformationen an den Benutzer (1) überträgt.

12. Server (20), der geeignet ist, Informationen mit einer elektronischen Vorrichtung (10) auszutauschen, und einen Rechner umfasst, der dafür konfiguriert ist, die Schritte des Datenverarbeitungsverfahrens nach dem vorherigen Anspruch auszuführen.

13. Computerprogrammprodukt, das Programmanweisungen umfasst, die die Schritte des Datenverarbeitungsverfahrens nach Anspruch 11 umsetzen, wenn die Programmanweisungen durch einen Computer ausgeführt werden.

14. System zum Austausch von Informationen über ein in einem Gebiet (Z) befindliches Ereignis (E), das einen Server (20) und eine elektronische Vorrichtung (10) umfasst, die eine Bilderfassungsvorrichtung (11) umfasst,
wobei die elektronische Vorrichtung (10) dafür konfiguriert ist, nach Öffnen eines bidirektionalen Kommunikationskanals zwischen der elektronischen Vorrichtung (10) und dem Server (20), das von einem Benutzer (1) der im Gebiet (Z) befindlichen elektronischen Vorrichtung (10) ausgelöst wird, Gebietsdaten, die von der Erfassungsvorrichtung (11) erfasste Bilder des Ereignisses (E) und Standortdaten der elektronischen Vorrichtung (10) umfassen, zu erfassen und die Gebietsdaten an den Server (20) zu übertragen, wobei der Server dafür konfiguriert ist, die Gebietsdaten zu analysieren, um abhängig von der Analyse Benutzerinformationen zu erzeugen, wobei die Benutzerinformationen Informationen umfassen, die abhängig vom Standort der elektronischen Vorrichtung (10) nahe dem Ort des Ereignisses (E) für den Benutzer (1), der sich im Gebiet (Z) befindet, nützlich sind, und die Benutzerinformationen an die elektronische Vorrichtung (10) zu übertragen, wobei die elektronische Vorrichtung (10) außerdem dafür konfiguriert ist, die Benutzerinformationen dem Benutzer (1) zu kommunizieren.

## Claims

1. Method for exchanging information about an event (E) located in a zone (Z), in a system comprising a server (20) and an electronic device (10) that is able to be used by a user (1), the electronic device (10) comprising an image acquisition device (11), the method for exchanging information comprising the following steps:
- an opening step (100) of opening a two-way communication channel between the electronic device (10) and the server (20), triggered by a user (1) of the electronic device (10), the user (1) being located in the zone (Z),
- an acquisition step (101) of the electronic device (10) acquiring zone data, the zone data comprising images of the event (E) that have been acquired by the acquisition device (11) and location data relating to said electronic device (10),
- a transmission step (102), in which the electronic device (10) transmits said zone data to the server (20),
- an analysis step (103) of the server (20) analysing the zone data,
- a generation step (104) of the server (20) generating user information on the basis of said analysis, the user information comprising useful information for the user (1), based on the location of the electronic device (10), close to the site of the event (E),
- an information return step (105), in which the server (20) transmits said user information to the electronic device (10) in order to communicate said user information to the user (1).

2. Method for exchanging information according to the preceding claim, the analysis step (103) comprising a machine analysis by a computer of the server (20) and a human analysis by a professional operator (2) of the server (20).

3. Method for exchanging information according to either one of the preceding claims, the user information being based on the location of said electronic device (10) .

4. Method for exchanging information according to any one of the preceding claims, the zone data moreover comprising user data selected by the user (1) from among a plurality of predetermined event contexts.

5. Method for exchanging information according to the preceding claim, the plurality of predetermined event contexts being based on the analysis and/or a history of events for said zone (Z).

6. Method for exchanging information according to any one of the preceding claims, the opening step (100) of opening a communication channel comprising a user action from among the electronic device (10) reading a code displayed in said zone (Z) at the initiative of the user (1), the user (1) activating a hyperlink sent to the electronic device (10) by a communication system, or the user (1) opening an application installed on the electronic device (10).

7. Method for exchanging information according to any one of the preceding claims, the communication channel being designed so that said zone data are transmitted to the server (20) without storing said images on said electronic device (10).

8. Method for exchanging information according to any one of the preceding claims, the analysis step (103) comprising a consolidation of the zone data with other zone data associated with one or more other electronic devices (10) located in said zone (Z).

9. Method for exchanging information according to any one of the preceding claims, the analysis step (103) comprising description of the event, the method for exchanging information moreover comprising:
- a production step (114) of the server (20) producing warning data on the basis of said analysis,
- a sending step (115) of the server (20) sending said warning data to predetermined services or individuals on the basis of the description of the event.

10. Method for exchanging information according to the preceding claim, the warning data moreover being based on the description of the event and/or on a location of the predetermined services or individuals.

11. Method for processing data about an event (E) located in a zone (Z), which method is implemented by a server (20) that is able to exchange information with an electronic device (10) comprising an image acquisition device (11), the method for processing data comprising:
- a reception step (102a) of receiving zone data originating from an electronic device (10) located in the zone (Z), the zone data comprising images of the event (E) and location data relating to said electronic device (10), following the opening of a two-way communication channel between the electronic device (10) and the server (20) triggered by a user (1) of the electronic device (10) who is located in the zone (Z),
- an analysis step (103) of analysing the zone data,
- a generation step (104) of generating user information on the basis of said analysis, the user information comprising useful information for the user (1), based on the location of the electronic device (10), close to the site of the event (E),
- an information return step (105), in which the server (20) transmits said user information to the electronic device (10) in order to communicate said user information to the user (1).

12. Server (20) that is able to exchange information with an electronic device (10), comprising a computer configured to execute the steps of the method for processing data according to the preceding claim.

13. Computer program product comprising the program instructions implementing the steps of the method for processing data according to Claim 11 when the program instructions are executed by a computer.

14. System for exchanging information about an event (E) located in a zone (Z), comprising a server (20) and an electronic device (10) comprising an image acquisition device (11),
the electronic device (10) being configured to acquire zone data comprising images of the event (E) that have been acquired by the acquisition device (11) and location data relating to said electronic device (10), following the opening of a two-way communication channel between the electronic device (10) and the server (20) triggered by a user (1) of the electronic device (10) who is located in the zone (Z), and to transmit said zone data to the server (20), the server being configured to analyse said zone data in order to generate user information on the basis of said analysis, the user information comprising useful information for the user (1) who is in the zone (Z), based on the location of the electronic device (10), close to the site of the event (E), and to transmit said user information to the electronic device (10), the electronic device (10) moreover being configured to communicate said user information to the user (1).
